# EUROPEAN PATENT APPLICATION

(11) **EP 4 804 268 A1**
(43) Date of publication of application: **09.09.2026**
(21) Application number: 23959780.0
(22) Date of filing: 29.11.2023
(51) Int. Cl.: H01M 10/052, H01M 4/00

(54) **BATTERY CELL, BATTERY, AND ELECTRIC DEVICE**

(71) Applicant: Contemporary Amperex Technology Co., Limited, Ningde, Fujian 352100 (CN)
(72) Inventor: ZHENG, Donglai, Ningde, Fujian 352100 (CN); SHI, Dongyang, Ningde, Fujian 352100 (CN); MA, Hao, Ningde, Fujian 352100 (CN); SHI, Yan, Ningde, Fujian 352100 (CN); LI, Baiqing, Ningde, Fujian 352100 (CN)
(74) Representative: Kraus & Lederer PartGmbB
(86) International application number: PCT/CN2023/135101
(87) International publication number: WO 2025/111861

(57) **Abstract**

Disclosed are a battery cell (100), a battery (200), and an electric apparatus (1000). The battery cell (100) includes a case (1), a pressure relief mechanism (2), and an electrode assembly (3). The case (1) has a first wall (11) and a second wall (12) that are adjacent and connected to each other. The pressure relief mechanism (2) is provided on the first wall (11). The electrode assembly (3) is provided in the case (1), the electrode assembly (3) has a first portion (3a) and a second portion (3b) sequentially arranged along a first direction (X), the first portion (3a) and the second portion (3b) each include multiple anode electrode sheet layers (32) and multiple cathode electrode sheet layers (31), the multiple anode electrode sheet layers (32) and the multiple cathode electrode sheet layers (31) are alternately stacked one-to-one along the first direction (X), the second portion (3b) is disposed between the first portion (3a) and the second wall (12), a distance from the cathode electrode sheet layer (31) of the second portion (3b) to the first wall (11) is greater than a distance from the cathode electrode sheet layer (31) of the first portion (3a) to the first wall (11), and the first direction (X) is perpendicular to the second wall (12).

## Description

### TECHNICAL FIELD

The present application relates to the field of battery technologies, and in particular, to a battery cell, a battery, and an electric apparatus.

### BACKGROUND

In recent years, new energy vehicles have developed by leaps and bounds, and in the field of electric vehicles, batteries play an irreplaceable and crucial role as power sources for the electric vehicles. As a core component of new energy vehicles, batteries have high requirements in terms of both energy density and reliability.

In related technologies, a battery includes multiple battery cells. During the continuous charging and discharging process of the battery cells, a large amount of heat is generated. Generally, a pressure relief mechanism is provided in the battery cell, and pressure is relieved through the pressure relief mechanism when the battery cell experiences thermal runaway. However, in some technologies, the pressure relief mechanism is prone to tensile cracking, affecting the reliability of the battery cell.

### SUMMARY

The present application provides a battery cell, a battery, and an electric apparatus, which can improve the use reliability of the battery cell while taking into account the energy density of the battery cell to a certain extent.

According to a first aspect, embodiments of the present application provide a battery cell. The battery cell includes: a case, where the case has a first wall and a second wall that are adjacent and connected to each other; a pressure relief mechanism, where the pressure relief mechanism is provided on the first wall; and an electrode assembly, where the electrode assembly is provided in the case, the electrode assembly has a first portion and a second portion sequentially arranged along a first direction, the first portion and the second portion each include multiple anode electrode sheet layers and multiple cathode electrode sheet layers, the multiple anode electrode sheet layers and the multiple cathode electrode sheet layers are alternately stacked one-to-one along the first direction, the second portion is disposed between the first portion and the second wall, a distance x2 from the cathode electrode sheet layer of the second portion to the first wall is greater than a distance x1 from the cathode electrode sheet layer of the first portion to the first wall, and the first direction is perpendicular to the second wall.

In the above technical solution, the second portion is disposed between the first portion and the second wall, the distance from the cathode electrode sheet layer of the second portion to the first wall is greater than the distance from the cathode electrode sheet layer of the first portion to the first wall, and when the electrode assembly swells and deforms, this is conducive to reducing the effect of the portion of the second wall close to the first wall on the first wall and reducing the tensile stress on the pressure relief mechanism from the second wall through the first wall, thereby reducing the probability of damage such as cracking of the pressure relief mechanism on the first wall and improving the reliability of the battery cell, while also taking into account the energy density of the battery cell to a certain extent.

In some embodiments, distances from the multiple cathode electrode sheet layers of the second portion to the first wall are equal; or, distances from the multiple cathode electrode sheet layers of the second portion to the first wall increase along the first direction from an interior of the battery cell toward an exterior of the battery cell.

In the above technical solution, the distances from the multiple cathode electrode sheet layers of the second portion to the first wall are set to be equal, which facilitates regular stacking of the multiple cathode electrode sheet layers. When the electrode assembly swells and deforms, this is conducive to further increasing the distance between the position where the second portion applies the main force to the second wall and the first wall, thereby facilitating further lowering the risk of damage or failure of the pressure relief mechanism due to tension. The distances from the multiple cathode electrode sheet layers of the second portion to the first wall are set to increase along the first direction from an interior of the battery cell toward an exterior of the battery cell, and when the electrode assembly swells and deforms, this is conducive to reducing the force applied by the portion of the second portion adjacent to the first wall to the second wall, while further taking into account the energy density of the battery cell.

In some embodiments, a distance x4 from the anode electrode sheet layer of the second portion to the first wall is greater than or equal to a distance x3 from the anode electrode sheet layer of the first portion to the first wall.

In the above technical solution, the distance from the anode electrode sheet layer of the second portion to the first wall is set to be greater than or equal to the distance from the anode electrode sheet layer of the first portion to the first wall, which is convenient to achieve a good match between a height of the anode electrode sheet layer of the second portion in a third direction (that is, a direction perpendicular to the plane where the first wall is located) and a height of the cathode electrode sheet layer of the second portion in the third direction, and a good match between a height of the anode electrode sheet layer of the first portion in the third direction and a height of the cathode electrode sheet layer of the first portion in the third direction. When the battery cell is a lithium battery, this better balance the capacity of the electrode assembly to accommodate lithium ions, which is conducive to achieving the design requirement that a corresponding dimension of the anode electrode sheet layer in the battery cell is larger than a corresponding dimension of the cathode electrode sheet layer, so as to maintain good electrochemical performance of the battery cell.

In some embodiments, distances from the multiple anode electrode sheet layers of the second portion to the first wall are equal; or, distances from the multiple anode electrode sheet layers of the second portion to the first wall increase along the first direction from an interior of the battery cell toward an exterior of the battery cell.

In the above technical solution, the distances from the multiple anode electrode sheet layers of the second portion to the first wall are set to be equal, which facilitates regular stacking of the multiple anode electrode sheet layers of the second portion. When the electrode assembly swells and deforms, this is conducive to further increasing the distance between the position where the second portion applies the main force to the second wall and the first wall, thereby facilitating further lowering the risk of damage or failure of the pressure relief mechanism due to tension. The distances from the multiple cathode electrode sheet layers of the second portion to the first wall are set to increase along the first direction from an interior of the battery cell toward an exterior of the battery cell, and when the electrode assembly swells and deforms, this is conducive to reducing the force applied by the portion of the second portion adjacent to the first wall to the second wall, while further taking into account the energy density of the battery cell.

In some embodiments, the first portion and the second portion each include a separator. When the distance from the anode electrode sheet layer of the second portion to the first wall is greater than the distance from the anode electrode sheet layer of the first portion to the first wall, a distance from the separator of the second portion to the first wall is greater than a distance from the separator of the first portion to the first wall; and when a distance from the anode electrode sheet layer of the second portion to the first wall is equal to a distance from the anode electrode sheet layer of the first portion to the first wall, a distance from the separator of the second portion to the first wall is equal to a distance from the separator of the first portion to the first wall.

In the above technical solution, the distance from the separator of the second portion to the first wall is set to be greater than or equal to the distance from the separator of the first portion to the first wall, which is convenient to achieve a good match with the arrangement of the anode electrode sheet layer of the second portion relative to the anode electrode sheet layer of the first portion, that is, the height of the separator of the second portion in a direction perpendicular to the first wall achieves a good match with the heights of the anode electrode sheet layer and the cathode electrode sheet layer of the second portion in the direction perpendicular to the first wall, and the height of the separator of the first portion in the direction perpendicular to the first wall achieves a good match with the heights of the anode electrode sheet layer and the cathode electrode sheet layer of the first portion in the direction perpendicular to the first wall, so as to facilitate the maximum utilization of the separator material while ensuring that the separator effectively isolates the anode electrode sheet layer from the cathode electrode sheet layer.

In some embodiments, n second portions are provided, n being a positive integer. When the distance from the anode electrode sheet layer of the second portion to the first wall is greater than the distance from the anode electrode sheet layer of the first portion to the first wall, a sum of thicknesses of the anode electrode sheet layer and the cathode electrode sheet layer of the second portion accounts for 25%/n to 30%/n of a thickness of the electrode assembly in the first direction; and/or, a sum of numbers of layers of the anode electrode sheet layer and the cathode electrode sheet layer of the second portion accounts for 10%/n to 20%/n of a sum of numbers of layers of the anode electrode sheet layer and the cathode electrode sheet layer of the electrode assembly.

In the above technical solution, when the distance from the anode electrode sheet layer of the second portion to the first wall is greater than the distance from the anode electrode sheet layer of the first portion to the first wall, by providing the proportion of the sum of thicknesses of the anode electrode sheet layer and the cathode electrode sheet layer of the second portion to the thickness of the electrode assembly in the first direction, and/or the proportion of the sum of numbers of layers of the anode electrode sheet layer and the cathode electrode sheet layer of the second portion to the sum of numbers of layers of the anode electrode sheet layer and the cathode electrode sheet layer of the electrode assembly. This facilitates reasonable setting of the thickness and/or number of layers of the second portion, which is conducive to achieving both the reliability of the battery cell and the energy density of the battery cell.

In some embodiments, n second portions are provided, n being a positive integer. When the distance from the anode electrode sheet layer of the second portion to the first wall is equal to the distance from the anode electrode sheet layer of the first portion to the first wall, a sum of thicknesses of the cathode electrode sheet layers of the second portion accounts for 25%/n to 30%/n of a thickness of the electrode assembly in the first direction; and/or, a number of layers of the cathode electrode sheet layers of the second portion accounts for 10%/n to 20%/n of a number of layers of the cathode electrode sheet layers of the electrode assembly.

In the above technical solution, when the distance from the anode electrode sheet layer of the second portion to the first wall is equal to the distance from the anode electrode sheet layer of the first portion to the first wall, by providing the proportion of the sum of thicknesses of the cathode electrode sheet layers of the second portion to the thickness of the electrode assembly in the first direction, and/or the proportion of the number of layers of the cathode electrode sheet layers of the second portion to the sum of numbers of layers of the cathode electrode sheet layers of the electrode assembly. This facilitates reasonable setting of the thickness and/or number of layers of the cathode electrode sheet layers of the second portion, which is conducive to achieving both the reliability of the battery cell and the energy density of the battery cell.

In some embodiments, on a plane where the first wall is located, an orthogonal projection of the second portion is located outside an outer contour of an orthogonal projection of the pressure relief mechanism.

In the above technical solution, on the plane where the first wall is located, the orthogonal projection of the second portion is set to be located outside the outer contour of the orthogonal projection of the pressure relief mechanism, which is convenient to arrange the orthogonal projection of the second portion and the orthogonal projection of the pressure relief mechanism at an interval along the first direction, so as to further appropriately increase the thickness of the second portion in the first direction while reducing the tensile stress exerted on the pressure relief mechanism due to swelling and deformation of the electrode assembly, thereby further taking into account the volumetric energy density of the battery cell.

In some embodiments, a maximum distance from the multiple cathode electrode sheet layers of the second portion to the first wall is h, with h≥2 mm.

In the above technical solution, the maximum distance h from the multiple cathode electrode sheet layers of the second portion to the first wall is set to be greater than or equal to 2 mm, which is convenient to effectively reduce the tension on the pressure relief mechanism when the electrode assembly swells and deforms, while facilitating the cooperation between the second portion and the first wall.

In some embodiments, h≤15 mm.

In the above technical solution, by providing that h≤15 mm, while reducing the tension on the pressure relief mechanism when the electrode assembly swells and deforms, the volumetric energy density of the battery cell can be taken into account to a certain extent.

In some embodiments, 3 mm≤h≤10 mm.

In the above technical solution, by providing that 3 mm≤h≤10 mm, this is convenient to achieve both the reliability and energy density of the battery cell.

In some embodiments, the electrode assembly is a laminated electrode assembly, a lamination direction of the anode electrode sheet layer and the cathode electrode sheet layer in the electrode assembly being the first direction; or, the electrode assembly is a wound electrode assembly, an axial direction of the electrode assembly being perpendicular to the first direction.

In the above technical solution, the electrode assembly is set to be a laminated structure or a wound structure, it is convenient to allow the battery cell to set electrode assemblies of different structures according to actual needs, which is conducive to improving the applicability of the battery cell.

In some embodiments, the electrode assembly is a wound electrode assembly, and the second portions are provided on two opposite sides of the first portion in the first direction, respectively.

In the above technical solution, the electrode assembly is set to be a wound electrode assembly, and the second portions are provided on two opposite sides of the first portion in the first direction, respectively, which is conducive to simplifying the unfolded structure of the wound electrode assembly and facilitating the processing of the electrode assembly 3.

In some embodiments, distances from the cathode electrode sheet layer of the two second portions to the first wall are equal, and distances from the anode electrode sheet layer of the two second portions to the first wall are equal.

In the above technical solution, the distances from the cathode electrode sheet layer of the two second portions to the first wall are set to be equal, and the distances from the anode electrode sheet layer of the two second portions to the first wall are set to be equal, which is convenient to further simplify the structure of the cathode electrode sheets and anode electrode sheets of the wound electrode assembly and simplify the processing steps.

In some embodiments, a sum of lengths of the multiple cathode electrode sheet layers of the two second portions in a circumferential direction of the electrode assembly accounts for 30% to 50% of a circumferential length of the electrode assembly.

In the above technical solution, the sum of lengths of the multiple cathode electrode sheet layers of the two second portions in the circumferential direction of the electrode assembly is set to be accounted for 30% to 50% of the circumferential length of the electrode assembly. This facilitates reasonable setting of the thickness and/or number of layers of the second portion, which is conducive to achieving both the reliability of the battery cell and the energy density of the battery cell.

In some embodiments, the case has two second walls oppositely arranged along the first direction, the first wall connects the two second walls, and the second portions are disposed between the first portion and each of the second walls, respectively.

In the above technical solution, the first wall is connected between the two second walls, the second portions are disposed between the first portion and each of the second walls, respectively, and when the electrode assembly swells and deforms, this is conducive to reducing the effect of each second wall on the first wall, facilitating reducing the overall tension on two ends of the pressure relief mechanism in the first direction, thereby facilitating further lowering the risk of the pressure relief mechanism being damaged by tension.

In some embodiments, the second wall is a wall with a largest area in the case.

In the above technical solution, the pressure relief mechanism is provided on the first wall, where the first wall is not the wall with the largest area in the case, the pressure relief mechanism can be provided on a surface of the case that is subjected to less force. Compared with providing the pressure relief mechanism on the second wall, when the electrode assembly swells and deforms, the force on the pressure relief mechanism can be reduced, which is conducive to further lowering the risk of damage or failure of the pressure relief mechanism due to tension.

In some embodiments, the pressure relief mechanism and a terminal of the battery cell are respectively provided on walls of different sides of the case.

In the above technical solution, the terminal is connected with a tab of the electrode assembly, and a certain gap is disposed between the wall where the terminal is located and a main body of the electrode assembly. The pressure relief mechanism and the terminal are respectively provided on walls of different sides of the case, a distance between the pressure relief mechanism and the main body of the electrode assembly can be appropriately shortened to a certain extent, making the distance between the pressure relief mechanism and the main body of the electrode assembly less restricted by the terminal. When the battery cell experiences thermal runaway, most of the discharge medium in the case can directly flow from an edge position of the main body of the electrode assembly to the pressure relief mechanism, thereby shortening the path of the discharge medium flowing to the pressure relief mechanism, enabling the discharge medium to quickly flow to the pressure relief mechanism, shortening the time for the discharge medium to reach the pressure relief mechanism, and improving the timeliness of pressure relief of the battery cell.

In some embodiments, the case further has a third wall, and the terminal is provided on the third wall, where the third wall is adjacent and connected to the first wall and the second wall, respectively; or, the third wall is adjacent and connected to the second wall, and the third wall is opposite to the first wall.

In the above technical solution, the terminal is provided on the third wall, and the third wall is adjacent or opposite to the first wall, it is convenient to meet the differentiated setting needs of the battery cell, which is conducive to improving the applicability of the battery cell.

In some embodiments, the case includes a case body and a case cover, at least one end of two ends of the case body in a second direction is open, the case cover is provided at an open end of the case body, and the first wall and the second wall are both formed on the case body, the second direction being perpendicular to the first direction.

In the above technical solution, the first wall and the second wall are formed on the case body, the structure of the case cover can be simplified, which is convenient to shorten the distance between the pressure relief mechanism and the main body of the electrode assembly, thereby shortening the path of the discharge medium flowing to the pressure relief mechanism during pressure relief, shortening the time for the discharge medium to reach the pressure relief mechanism, and improving the timeliness of pressure relief of the battery cell.

In some embodiments, one end of the case body in the second direction is open, and the first wall is connected to an end of the second wall away from the open end; or, two ends of the case body in the second direction are open, respectively, and the first wall and the second wall both extend to open ends on two sides.

In the above technical solution, this is convenient to improve the processing convenience of the case body and the case cover, and improve the assembly convenience of the case.

In some embodiments, the pressure relief mechanism is integrally formed with the first wall.

In the above technical solution, the pressure relief mechanism is integrally formed with the first wall, the forming method of the pressure relief mechanism is simple, the number of components constituting the battery cell can be reduced, the structure of the battery cell can be simplified, and the cost can be reduced.

In some embodiments, an inner surface and/or an outer surface of the first wall is provided with a groove, and a bottom wall of the groove forms the pressure relief mechanism.

In the above technical solution, a groove is provided on the inner surface and/or outer surface of the first wall, and the bottom wall of the groove forms the pressure relief mechanism, facilitating processing and forming the pressure relief mechanism.

In some embodiments, the first wall is formed with a score groove, a region of the first wall corresponding to the score groove is configured as a weak region of the pressure relief mechanism, and the weak region is configured to rupture when the battery cell relieves pressure.

In the above technical solution, the first wall is formed with a score groove, and the region of the first wall corresponding to the score groove is configured as a weak region of the pressure relief mechanism, which is convenient for processing and forming the pressure relief mechanism.

In some embodiments, the pressure relief mechanism is separately provided from the first wall, and the pressure relief mechanism mounted on the first wall.

In the above technical solution, the pressure relief mechanism and the first wall are configured as separate components, which is convenient to provide the pressure relief mechanism on the case, with low generation difficulty and high efficiency. This can improve the production efficiency of the battery cell.

According to a second aspect, embodiments of the present application provide a battery cell. The battery cell includes: a case, where the case has a first wall and a second wall that are adjacent and connected to each other; a pressure relief mechanism, where the pressure relief mechanism is provided on the first wall; and an electrode assembly, where the electrode assembly is provided in the case, the electrode assembly includes anode electrode sheet layers and cathode electrode sheet layers stacked along a first direction, and a distance between the electrode assembly and the first wall satisfies 2 mm≤h≤15 mm, the first direction being parallel to a plane where the first wall is located.

In the above technical solution, the distance between the electrode assembly and the first wall is set to satisfy 2 mm≤h≤15 mm, and when the electrode assembly swells and deforms, this is conducive to increasing the distance between the position where the electrode assembly applies the main force to the two walls oppositely arranged along the first direction of the case and the first wall, thereby facilitating lowering the risk of the pressure relief mechanism being damaged or failing due to tension on the first wall, improving the use reliability of the battery cell, while also taking into account the volumetric energy density of the battery cell to a certain extent without excessively reducing the energy density of the battery cell.

According to a third aspect, embodiments of the present application provide a battery, including the above battery cell.

In the above technical solution, since the battery adopts the above battery cell, which is conducive to improving the use reliability and energy density of the battery.

According to a fourth aspect, embodiments of the present application provide an electric apparatus, including the above battery, and the battery configured to provide electrical energy.

In the above technical solution, since the electric apparatus adopts the above battery, and the battery has good use reliability and energy density, which is conducive to improving the reliability and endurance capability of the electric apparatus.

### BRIEF DESCRIPTION OF DRAWINGS

The above and/or additional aspects and advantages of the present application will become obvious and easy to understand from the description of some embodiments with reference to the following accompanying drawings.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application, where an electrode assembly is a wound electrode assembly;
FIG. 4 is a schematic structural diagram of a battery cell according to some embodiments of the present application;
FIG. 5 is a schematic diagram of a battery cell according to some embodiments of the present application, where an electrode assembly is a laminated electrode assembly;
FIG. 6 is a partial cross-sectional view of a battery cell according to some embodiments of the present application, where an electrode assembly is a wound electrode assembly or a laminated electrode assembly;
FIG. 7 is a partial cross-sectional view of a battery cell according to some embodiments of the present application, where an electrode assembly is a wound electrode assembly or a laminated electrode assembly;
FIG. 8 is a partial cross-sectional view of a battery cell according to some embodiments of the present application, where an electrode assembly is a wound electrode assembly or a laminated electrode assembly;
FIG. 9 is a partial cross-sectional view of a battery cell according to some embodiments of the present application, where an electrode assembly is a wound electrode assembly or a laminated electrode assembly; and
FIG. 10 is a schematic diagram of an unfolded cathode electrode sheet of a wound electrode assembly according to some embodiments of the present application.

Reference signs:
electric apparatus 1000, controller 300, motor 400,
battery 200, battery cell 100, box 101, first box body 101a, second box body 101b,
case 1, first wall 11, groove 11a, score groove 11b, second wall 12, third wall 13, case body 1a, case cover 1b,
pressure relief mechanism 2, electrode assembly 3, flat region 30, first portion 3a, second portion 3b, cathode electrode sheet layer 31, anode electrode sheet layer 32, separator 33, tab sheet 34, first segment 35, second segment 36, and terminal 4.

### DESCRIPTION OF EMBODIMENTS

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification and claims of the present application as well as the foregoing description of drawings are intended to cover non-exclusive inclusions. In the specification, claims, or accompanying drawings of the present application, the terms "first", "second", and the like are intended to distinguish between different objects rather than to indicate a particular sequence or relative importance.

Reference to "embodiment" in the present application means that specific features, structures, or characteristics described with reference to the embodiment may be included in at least one embodiment of the present application. The term "embodiment" appearing in various positions in the specification does not necessarily refer to the same embodiment or an independent or alternative embodiment that is exclusive of other embodiments.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that, as shown in the accompanying drawings, dimensions of various components in the embodiments of the present application are merely for illustrative purposes and should not constitute any limitation on the present application.

In the present application, "multiple" means more than two (inclusive).

In the present application, the battery cell may include a lithium-ion secondary battery, a lithium-ion primary battery, a lithium-sulfur battery, a sodium-lithium-ion battery, a sodium-ion battery, a magnesium-ion battery, a nickel-hydrogen battery, a nickel-cadmium battery, a lead storage battery, or the like. This is not limited in the embodiments of the present application. The battery cell may be cylindrical, flat, rectangular, or of other shapes, which is not limited in the embodiments of the present application either. Battery cells are typically divided into three types by packaging method: columnar battery cell, prismatic battery cell, and pouch battery cell. This is not limited in the embodiments of the present application either.

The battery mentioned in the embodiments of the present application is a single physical module that includes one or more battery cells for providing higher voltage and capacity. For example, the battery mentioned in the present application may be a battery module or a battery pack, or the like. A battery module generally includes multiple battery cells. A battery generally includes a box for packaging multiple battery cells or multiple battery modules. The box can avoid the influence of liquids or other foreign objects on the charging or discharging of the battery cells to a certain extent. Certainly, the battery may also not include a box.

For example, a battery cell may generally include a case, a cell assembly, and an electrolyte. The case is configured to accommodate the cell assembly and the electrolyte, and the case is provided with at least one positive electrode terminal and at least one negative electrode terminal. The cell assembly includes one or more electrode assemblies, and the electrode assembly is made from a positive electrode sheet, a negative electrode sheet, and a separator through lamination or winding. The case may be a steel case, an aluminum case, a plastic (for example, polypropylene) case, a composite metal case (for example, copper-aluminum composite case), an aluminum-plastic film, or the like.

The positive electrode sheet may generally include a positive electrode sheet body and a positive electrode active material layer. The positive electrode active material layer is directly or indirectly applied on the positive electrode sheet body, the positive electrode sheet body uncoated with the positive electrode active material layer serves as a positive electrode tab sheet, and multiple positive electrode tab sheets are stacked together and form an electrical connection with the positive electrode terminal. For example, multiple positive electrode tab sheets stacked together may be directly welded to the positive electrode terminal to form an electrical connection; or, the cell assembly may further include a positive electrode adapting piece, multiple positive electrode tab sheets stacked together are welded to one end of the positive electrode adapting piece, and another end of the positive electrode adapting piece is welded to the positive electrode terminal, so that the positive electrode tab sheets form an electrical connection with the positive electrode terminal.

The negative electrode sheet may generally include a negative electrode sheet body and a negative electrode active material layer. The negative electrode active material layer is directly or indirectly applied on the negative electrode sheet body, the negative electrode sheet body uncoated with the negative electrode active material layer serves as a negative electrode tab sheet, and multiple negative electrode tab sheets are stacked together and form an electrical connection with the negative electrode terminal. For example, multiple negative electrode tab sheets stacked together may be directly welded to the negative electrode terminal to form an electrical connection; or, the cell assembly may further include a negative electrode adapting piece, multiple negative electrode tab sheets stacked together are welded to one end of the negative electrode adapting piece, and another end of the negative electrode adapting piece is welded to the negative electrode terminal, so that the negative electrode tab sheets form an electrical connection with the negative electrode terminal. A material of the separator is not limited, for example, may be polypropylene, polyethylene, or the like.

For the pressure relief mechanism on the battery cell mentioned in the present application, the pressure relief mechanism is used to release internal gas from the battery cell when the internal pressure of the battery cell becomes excessive (for example, caused by overcharging, or the like), thereby reducing the internal pressure of the battery cell, preventing the battery cell from exploding and burning due to too rapid pressurization inside the battery cell, and improving the reliability of the battery cell. For example, the pressure relief mechanism may be an explosion-proof valve, an explosion-proof sheet, or the like.

In recent years, new energy vehicles have developed by leaps and bounds, and in the field of electric vehicles, batteries play an irreplaceable and crucial role as power sources for the electric vehicles. As a core component of new energy vehicles, batteries have high requirements in terms of both energy density and reliability.

In related technologies, a battery includes multiple battery cells. During the continuous charging and discharging process of the battery cells, a large amount of heat is generated. Generally, a pressure relief mechanism is provided in the battery cell, and pressure is relieved through the pressure relief mechanism when the battery cell experiences thermal runaway.

When designing a battery cell, considering the energy density of the battery, the space occupancy of the electrode assembly of the battery cell in an outer case should be as large as possible, so the distance between the electrode assembly and the case wall where the pressure relief mechanism is located is relatively close compared to the distance between the electrode assembly and the case wall opposite to the pressure relief mechanism. However, when the electrode assembly of the battery cell swells and deforms, the case of the battery cell also deforms, leading to bulging of the case. The pressure relief mechanism is generally provided on the case, so that the case wall where the pressure relief mechanism is located is subjected to tensile stress. When the tensile stress reaches a certain degree, the pressure relief mechanism is prone to tensile cracking, leading to damage or failure of the pressure relief mechanism, and reducing the reliability of the battery cell. Therefore, developing more reliable battery systems without thermal propagation has become the pursuit goal of various battery manufacturers and vehicle manufacturers.

Based on the above considerations, in order to improve the reliability of the battery cell, a battery cell is proposed, including a case, a pressure relief mechanism, and an electrode assembly. The case has a first wall and a second wall that are adjacent and connected to each other. The pressure relief mechanism is provided on the first wall. The electrode assembly is provided in the case, the electrode assembly has a first portion and a second portion sequentially arranged along a first direction, the first portion and the second portion each include multiple anode electrode sheet layers and multiple cathode electrode sheet layers, the multiple anode electrode sheet layers and the multiple cathode electrode sheet layers are alternately stacked one-to-one along the first direction, the second portion is disposed between the first portion and the second wall, a distance x2 from the cathode electrode sheet layer of the second portion to the first wall is greater than a distance x1 from the cathode electrode sheet layer of the first portion to the first wall, and the first direction is perpendicular to the second wall.

In the above technical solution, the second portion is disposed between the first portion and the second wall, the distance from the cathode electrode sheet layer of the second portion to the first wall is greater than the distance from the cathode electrode sheet layer of the first portion to the first wall, and when the electrode assembly swells and deforms, this is conducive to reducing the effect of the portion of the second wall close to the first wall on the first wall, and reducing the tensile stress on the pressure relief mechanism from the second wall through the first wall, thereby reducing the probability of damage such as cracking of the pressure relief mechanism on the first wall and improving the reliability of the battery cell, while also taking into account the energy density of the battery cell to a certain extent.

Embodiments of the present application provide an electric apparatus using the battery disclosed in the present disclosure as a power source. The electric apparatus may be, but is not limited to, a mobile phone, a tablet, a laptop computer, an electric toy, an electric tool, an electric bicycle, an electric vehicle, a ship, and a spacecraft. The electric toy may include a fixed or mobile electric toy, for example, a game console, an electric toy car, an electric toy ship, and an electric toy aircraft. The spacecraft may include an aircraft, a rocket, a space shuttle, and a spaceship.

For ease of description, the electric apparatus 1000 being a vehicle is used as an example, to introduce the structures of the electric apparatus 1000, the battery 200, and the battery cell 100 of the present application in detail.

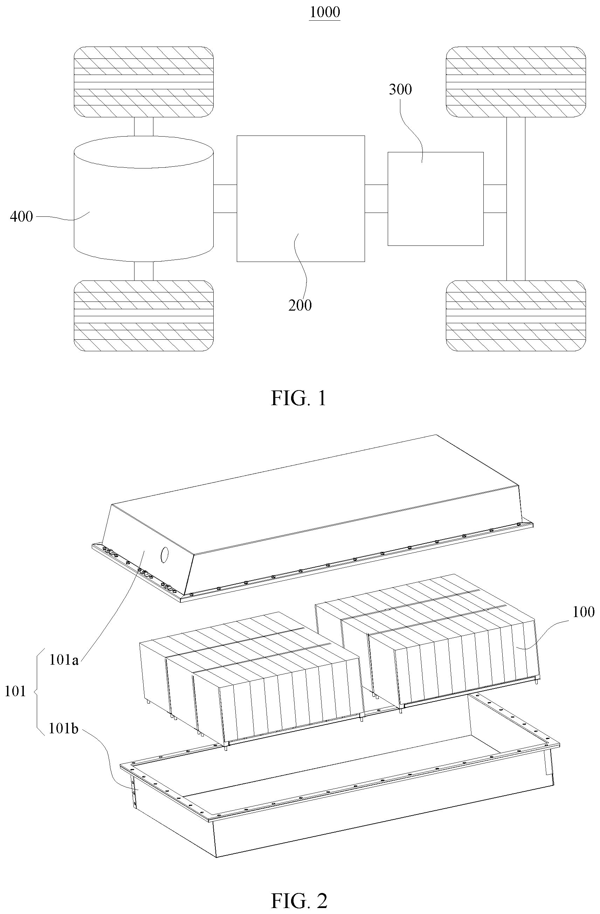

Referring to FIG. 1, FIG. 1 is a schematic structural diagram of the electric apparatus 1000 being a vehicle according to some embodiments of the present application. The vehicle may be a fossil fuel vehicle, a natural-gas vehicle, or a new energy vehicle, where the new energy vehicle may be a battery electric vehicle, a hybrid electric vehicle, a range-extended vehicle, or the like. The vehicle is provided with a battery 200, where the battery 200 may be disposed at the bottom, front, or rear of the vehicle. The battery 200 may be configured to supply power to the vehicle. For example, the battery 200 may be used as an operational power source for the vehicle. The vehicle may further include a controller 300 and a motor 400, where the controller 300 is configured to control the battery 200 to supply power to the motor 400, for example, to satisfy power needs of start, navigation, and driving of the vehicle. In some embodiments of the present application, the battery 200 can be used as not only the operational power source for the vehicle but also a driving power source for the vehicle, replacing or partially replacing fossil fuel or natural gas to provide driving traction for the vehicle.

Referring to FIG. 2, FIG. 2 is an exploded view of a structure of the battery 200 according to some embodiments of the present application. The battery 200 includes a box 101 and multiple battery cells 100, where the battery cells 100 are accommodated in the box 101. The box 101 is configured to provide an assembly space for the battery cells 100, and the box 101 may adopt multiple structures. In some embodiments, the box 101 may include a first box body 101a and a second box body 101b. The first box body 101a and the second box body 101b fit together to jointly define an accommodating cavity for accommodating the battery cells. The second box body 101b may be a hollow structure with one end open, the first box body 101a may be a plate-like structure, and the first box body 101a covers the open side of the second box body 101b, so that the first box body 101a and the second box body 101b jointly define the accommodating cavity. Alternatively, both the first box body 101a and the second box body 101b may be hollow structures with one side open (as shown in FIG. 2), and the open side of the first box body 101a is engaged with the open side of the second box body 101b. Certainly, the box 101 formed by the first box body 101a and the second box body 101b may be of various shapes, for example, cylinder or cuboid.

In the battery 200, multiple battery cells 100 may be connected in series, parallel, or series-parallel, where being connected in series-parallel means that the multiple battery cells 100 are connected in both series and parallel. Multiple battery cells 100 may be directly connected in series, parallel or series-parallel, and then an entirety of the multiple battery cells 100 is accommodated in the box 101; or, the battery 200 may be formed by multiple battery cells 100 being connected in series, parallel, or series-parallel first to form a battery module, and then multiple battery modules being connected in series, parallel or series-parallel to form an entirety which is accommodated in the box 101. The battery 200 may further include other structures. For example, the battery 200 may further include a busbar configured to implement electrical connection between multiple battery cells 100.

In some embodiments, the box 101 may be used as part of a chassis structure of the vehicle. For example, part of the box 101 may be referred to as at least part of a floor of the vehicle, or part of the box 101 may be referred to as at least parts of a cross beam and longitudinal beam of the vehicle.

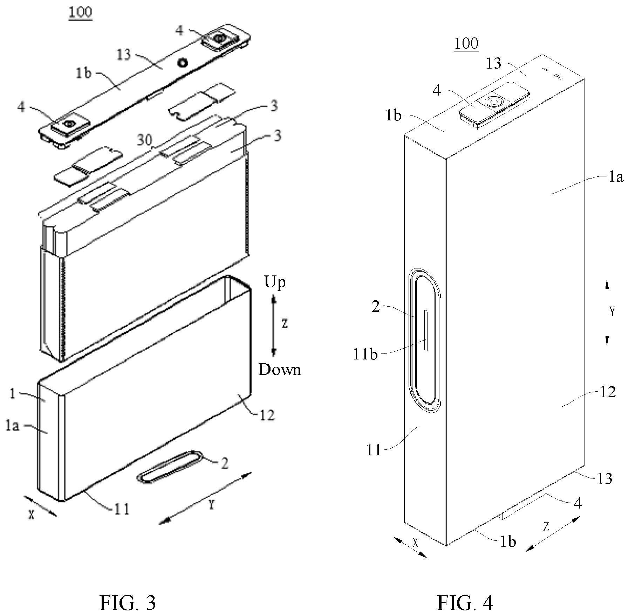

Referring to FIG. 3 and FIG. 4, FIG. 3 is a schematic structural diagram of the battery cell 100 according to some embodiments of the present application, and FIG. 4 is a schematic structural diagram of the battery cell 100 according to some embodiments of the present application. The battery cell 100 is rectangular, and a height direction of the battery cell 100 is a third direction Z, a length direction of the battery cell 100 is a second direction Y, and a thickness direction of the battery cell 100 is a first direction X. The first direction X, the second direction Y, and the third direction Z are perpendicular to each other, which is not limited thereto. In other embodiments of the present application, the battery cell 100 may also be polygonal, flat, or of other shapes.

Referring to FIG. 3 to FIG. 5, in the embodiments of the present application, the battery cell 100 includes a case 1 and a pressure relief mechanism 2. The case 1 has a first wall 11 and a second wall 12. The second wall 12 and the first wall 11 are adjacent and connected to each other. The pressure relief mechanism 2 is provided on the first wall 11, and the pressure relief mechanism 2 is configured to be capable of relieving the internal pressure of the battery cell 100.

The battery cell 100 further includes an electrode assembly 3. The electrode assembly 3 is provided in the case 1. The electrode assembly 3 has a first portion 3a and a second portion 3b sequentially arranged along a first direction. The first portion 3a and the second portion 3b each include multiple anode electrode sheet layers 32 and multiple cathode electrode sheet layers 31. The multiple anode electrode sheet layers 32 and the multiple cathode electrode sheet layers 31 of the first portion 3a are alternately stacked one-to-one along the first direction, and the multiple anode electrode sheet layers 32 and the multiple cathode electrode sheet layers 31 of the second portion 3b are alternately stacked one-to-one along the first direction. For the electrode assembly 3, the multiple anode electrode sheet layers 32 and the multiple cathode electrode sheet layers 31 of the electrode assembly 3 are alternately stacked one-to-one along the first direction, a cathode electrode sheet layer 31 is disposed between two adjacent anode electrode sheet layers 32, and an anode electrode sheet layer 32 is disposed between two adjacent cathode electrode sheet layers 31. The first direction is perpendicular to the second wall 12.

It can be understood that one electrode assembly 3 or multiple electrode assemblies 3 may be provided in the case 1, and each electrode assembly 3 includes multiple anode electrode sheet layers 32 and multiple cathode electrode sheet layers 31 stacked along the first direction. For example, the electrode assembly 3 may be a laminated structure, that is, multiple electrode sheet layers of the electrode assembly 3 are stacked, and after the multiple electrode sheet layers are stacked, a flat region 30 is formed. In the flat region 30, at least a part of the cathode electrode sheet layer 31 and the anode electrode sheet layer 32 are stacked along the first direction, or, at least a part of the anode electrode sheet layer 32 and the cathode electrode sheet layer 31 are stacked along the first direction. At this time, the swelling and deformation of the electrode assembly 3 is particularly obvious in the first direction. The electrode assembly 3 may also be a wound structure, that is, multiple electrode sheet layers of the electrode assembly 3 are stacked and wound into shape, and a flat region 30 is formed. In the flat region 30, a part of the anode electrode sheet, that is, the anode electrode sheet layer 32, and a part of the cathode electrode sheet, that is, the cathode electrode sheet layer 31, are stacked along the first direction. For example, after winding, the cathode electrode sheet layer 31 and the anode electrode sheet layer 32 may both be penetrated by a shaft extending along the first direction. At this time, the swelling and deformation of the electrode assembly 3 is particularly obvious in the first direction.

Apparently, when the electrode assembly 3 swells, most of the swelling of the electrode assembly 3 acts on the second wall 12, so the influence of the electrode assembly 3 due to swelling on the first wall 11 is less than that on the second wall 12. The pressure relief mechanism 2 is provided on the first wall 11, which is conducive to lowering the risk of the pressure relief mechanism 2 being blocked or damaged due to swelling of the electrode assembly 3.

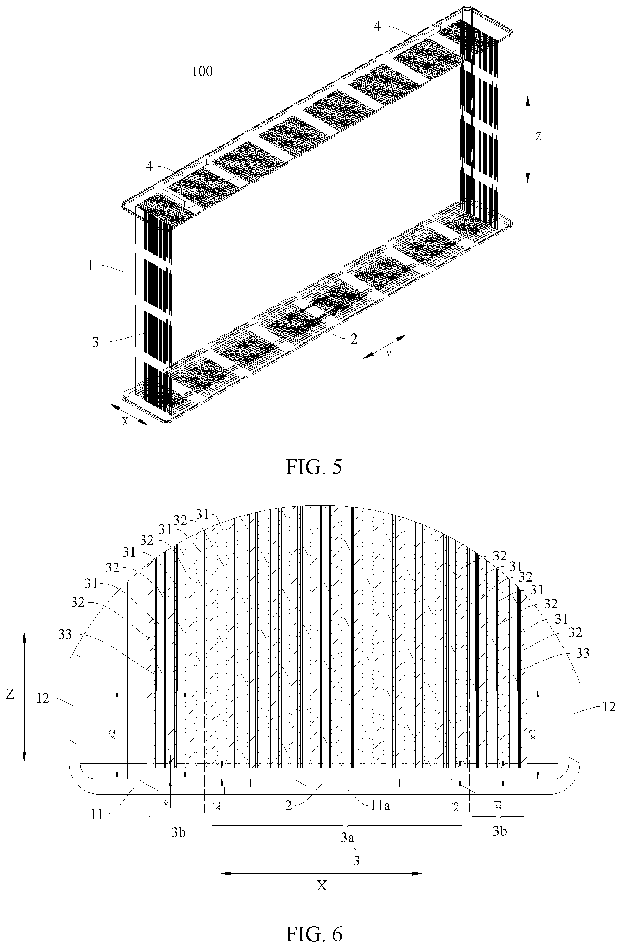

Referring to FIG. 6 to FIG. 9, the second portion 3b is disposed between the first portion 3a and the second wall 12. A distance x2 from the cathode electrode sheet layer 31 of the second portion 3b to the first wall 11 is greater than a distance x1 from the cathode electrode sheet layer 31 of the first portion 3a to the first wall 11, so that the cathode electrode sheet layer 31 of the second portion 3b close to the second wall 12 in the first direction is relatively far from the first wall 11 in a direction perpendicular to the first wall 11, facilitating a shortened design of the cathode electrode sheet layer 31 of the second portion 3b in the direction perpendicular to the first wall 11, such that the end of the cathode electrode sheet layer 31 of the second portion 3b close to the first wall 11 has a cutout design relative to the end of the cathode electrode sheet layer 31 of the first portion 3a close to the first wall 11.

Thus, when the electrode assembly 3 swells and deforms, the swelling and deformation of the electrode assembly 3 is particularly obvious in the first direction. The electrode assembly 3 applies a force to the second wall 12, that is, the second portion 3b applies a force to the second wall 12. The above setting of the present application facilitates increasing the distance between the position where the second portion 3b applies the main force to the second wall 12 and the first wall 11, and/or facilitates reducing the force applied by the portion of the second portion 3b adjacent to the first wall 11 to the second wall 12, thereby facilitating reducing the force of the second wall 12 on the first wall 11, making the first wall 11 basically unstressed or less stressed, thereby reducing the tensile stress of the second wall 12 on the pressure relief mechanism 2 through the first wall 11 due to swelling of the electrode assembly 3, further reducing the probability of damage such as cracking of the pressure relief mechanism 2 on the first wall 11, and improving the reliability of the battery cell 100.

In addition, the above setting of the embodiments of the present application can differentiate the heights of the cathode electrode sheet layer 31 of the first portion 3a and the cathode electrode sheet layer 31 of the second portion 3b in the direction perpendicular to the first wall 11, so as to reduce the probability of electrolyte leakage to a certain extent while reducing the risk of the pressure relief mechanism 2 being damaged by tension, and take into account the volumetric energy density of the battery cell 100 at the same time without excessively reducing the volumetric energy density of the battery cell 100.

For example, the height direction of the battery cell 100 is the third direction Z, the length direction of the battery cell 100 is the second direction Y, and the thickness direction of the battery cell 100 is the first direction X. In the third direction Z, the distance from the cathode electrode sheet layer 31 of the second portion 3b to the first wall 11 is greater than the distance from the cathode electrode sheet layer 31 of the first portion 3a to the first wall 11. The third direction Z being used as an up-down direction is used as an example, the first wall 11 is the bottom wall of the case 1. By differentiating the heights of the cathode electrode sheet layer 31 of the first portion 3a and the cathode electrode sheet layer 31 of the second portion 3b in the up-down direction, this is conducive to reducing the force on a lower part of the case 1 due to swelling and deformation of the electrode assembly 3, thereby reducing the tensile stress exerted on the pressure relief mechanism 2 located on the bottom wall of the case 1, and lowering the risk of tensile cracking of the pressure relief mechanism 2. In addition, providing the pressure relief mechanism 2 on the bottom wall of the case 1 enables the battery cell 100 to achieve a bottom venting design, which is conducive to mitigating the thermal propagation of the battery 200. For example, the battery 200 is generally placed at the bottom of the electric apparatus, with electrical components or personnel above it. When the battery 200 experiences thermal runaway, the battery cell 100 can vent and relieve pressure downward, which can reduce the fire situation in an upper region of the battery 200, especially when there are many battery cells 100, that is, reducing the loss of electrical components and reducing personnel injury. Adopting this structure can reduce the influence of thermal runaway of the battery 200 on the electric apparatus and improve the use reliability of the battery 200.

In the above technical solution, the second portion 3b is disposed between the first portion 3a and the second wall 12, the distance from the cathode electrode sheet layer 31 of the second portion 3b to the first wall 11 is greater than the distance from the cathode electrode sheet layer 31 of the first portion 3a to the first wall 11, and when the electrode assembly 3 swells and deforms, this is conducive to reducing the effect of the portion of the second wall 12 close to the first wall 11 on the first wall 11, and reducing the tensile stress on the pressure relief mechanism 2 through the first wall 11 from the second wall 12, thereby reducing the probability of damage such as cracking of the pressure relief mechanism 2 on the first wall 11 and improving the reliability of the battery cell 100, while also taking into account the energy density of the battery cell 100 to a certain extent.

It can be understood that in the second portion 3b, only all cathode electrode sheet layers 31 have a distance to the first wall 11 greater than the distance from the cathode electrode sheet layer 31 of the first portion 3a to the first wall 11; or, in the second portion 3b, not only all cathode electrode sheet layers 31 have a distance to the first wall 11 greater than the distance from the cathode electrode sheet layer 31 of the first portion 3a to the first wall 11, but also at least one anode electrode sheet layer 32 in the second portion 3b has a distance to the first wall 11 greater than the distance from the cathode electrode sheet layer 31 of the first portion 3a to the first wall 11.

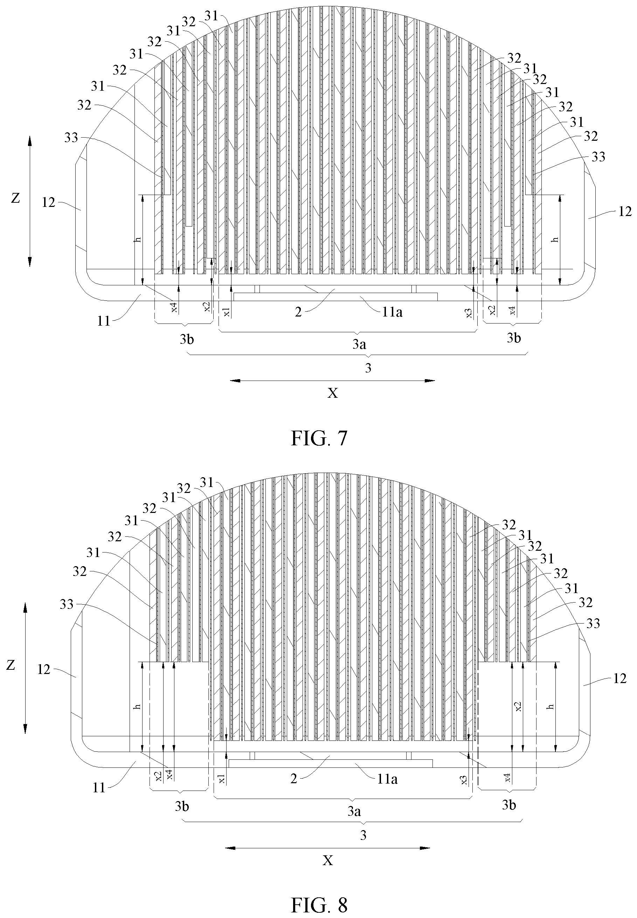

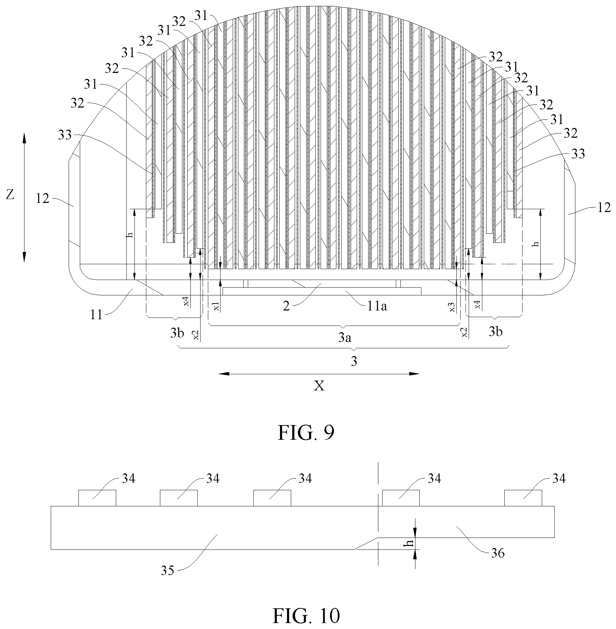

Referring to FIG. 6 and FIG. 8, in some embodiments, distances from the multiple cathode electrode sheet layers 31 of the second portion 3b to the first wall 11 are equal; or, referring to FIG. 7 and FIG. 9, distances from the multiple cathode electrode sheet layers 31 of the second portion 3b to the first wall 11 increase along the first direction from an interior of the battery cell 100 toward an exterior of the battery cell 100.

It can be seen that in the above solution, between any two adjacent cathode electrode sheet layers 31 of the multiple cathode electrode sheet layers 31 of the second portion 3b, the distance from the cathode electrode sheet layer 31 close to the second wall 12 to the first wall 11 is greater than or equal to the distance from the cathode electrode sheet layer 31 farther from the second wall 12 to the first wall 11.

In the above technical solution, the distances from the multiple cathode electrode sheet layers 31 of the second portion 3b to the first wall 11 are set to be equal, which facilitates regular stacking of the multiple cathode electrode sheet layers 31 of the second portion 3b. When the electrode assembly 3 swells and deforms, this is conducive to further increasing the distance between the position where the second portion 3b applies the main force to the second wall 12 and the first wall 11, thereby facilitating further lowering the risk of damage or failure of the pressure relief mechanism 2due to tension. The distances from the multiple cathode electrode sheet layers 31 of the second portion 3b to the first wall 11 are set to increase along the first direction from an interior of the battery cell 100 toward an exterior of the battery cell 100, and when the electrode assembly 3 swells and deforms, this is conducive to reducing the force applied by the portion of the second portion 3b adjacent to the first wall 11 to the second wall 12, while further taking into account the energy density of the battery cell 100.

It can be understood that the distances from the multiple cathode electrode sheet layers 31 of the second portion 3b to the first wall 11 increasing along the first direction from an interior of the battery cell 100 toward an exterior of the battery cell 100 may mean that at least two of the multiple cathode electrode sheet layers 31 of the second portion 3b have different distances to the first wall 11, the distances from the at least two cathode electrode sheet layers 31 of the second portion 3b to the first wall 11 increase along the first direction from an interior of the battery cell 100 toward an exterior of the battery cell 100.

For example, the distances from the multiple cathode electrode sheet layers 31 of the second portion 3b to the first wall 11 increase stepwise and gradually along the first direction from an interior of the battery cell 100 toward an exterior of the battery cell 100, then between any two adjacent cathode electrode sheet layers 31 of the multiple cathode electrode sheet layers 31 of the second portion 3b, the distance from the cathode electrode sheet layer 31 close to the second wall 12 to the first wall 11 is greater than the distance from the cathode electrode sheet layer 31 farther from the second wall 12 to the first wall 11.

Referring to FIG. 6 to FIG. 9, in some embodiments, a distance x4 from the anode electrode sheet layer 32 of the second portion 3b to the first wall 11 is greater than or equal to a distance x3 from the anode electrode sheet layer 32 of the first portion 3a to the first wall 11.

In the above technical solution, the distance x4 from the anode electrode sheet layer 32 of the second portion 3b to the first wall 11 is set to be greater than or equal to the distance x3 from the anode electrode sheet layer 32 of the first portion 3a to the first wall 11, which is convenient to achieve a good match between a height of the anode electrode sheet layer 32 of the second portion 3b in a third direction (that is, a direction perpendicular to the first wall 11) and a height of the cathode electrode sheet layer 31 of the second portion 3b in the third direction, and a good match between a height of the anode electrode sheet layer 32 of the first portion 3a in the third direction and a height of the cathode electrode sheet layer 31 of the first portion 3a in the third direction. When the battery cell 100 is a lithium battery, this better balance the capacity of the electrode assembly 3 to accommodate lithium ions, which is conducive to achieving the design requirement that a corresponding dimension of the anode electrode sheet layer 32 in the battery cell 100 is larger than a corresponding dimension of the cathode electrode sheet layer 31, so as to maintain good electrochemical performance of the battery cell 100.

If the distance x4 from the anode electrode sheet layer 32 of the second portion 3b to the first wall 11 is greater than the distance x3 from the anode electrode sheet layer 32 of the first portion 3a to the first wall 11, the anode electrode sheet layer 32 of the second portion 3b close to the second wall 12 in the first direction is relatively far from the first wall 11 in a direction perpendicular to the first wall 11, facilitating a shortened design of the anode electrode sheet layer 32 of the second portion 3b in the direction perpendicular to the first wall 11, such that the end of the anode electrode sheet layer 32 of the second portion 3b close to the first wall 11 has a cutout design relative to the end of the anode electrode sheet layer 32 of the first portion 3a close to the first wall 11. When the electrode assembly 3 swells and deforms, this further increases the distance between the position where the second portion 3b applies the main force to the second wall 12 and the first wall 11, and/or further reduce the force applied by the portion of the second portion 3b adjacent to the first wall 11 to the second wall 12, thereby further reducing the probability of tensile cracking of the pressure relief mechanism 2. Moreover, the anode electrode sheet layer 32 of the second portion 3b and the cathode electrode sheet layer 31 of the second portion 3b can achieve a better match, which is conducive to saving the material usage of the anode electrode sheet layer 32 and reducing costs.

If the distance x4 from the anode electrode sheet layer 32 of the second portion 3b to the first wall 11 is equal to the distance x3 from the anode electrode sheet layer 32 of the first portion 3a to the first wall 11, it is convenient to allow the anode electrode sheet layer 32 of the second portion 3b and the anode electrode sheet layer 32 of the first portion 3a to have the same specifications and dimensions, reducing the processing difficulty of the electrode assembly 3 and facilitating improving processing efficiency.

Referring to FIG. 6 to FIG. 8, in some embodiments, distances from the multiple anode electrode sheet layers 32 of the second portion 3b to the first wall 11 are equal; or, referring to FIG. 9, distances from the multiple anode electrode sheet layers 32 of the second portion 3b to the first wall 11 increase along the first direction from an interior of the battery cell 100 toward an exterior of the battery cell 100.

It can be seen that in the above solution, between any two adjacent anode electrode sheet layers 32 of the multiple anode electrode sheet layers 32 of the second portion 3b, the distance from the anode electrode sheet layer 32 close to the second wall 12 to the first wall 11 is greater than or equal to the distance from the anode electrode sheet layer 32 farther from the second wall 12 to the first wall 11.

In the above technical solution, the distances from the multiple anode electrode sheet layers 32 of the second portion 3b to the first wall 11 are set to be equal, which facilitates regular stacking of the multiple anode electrode sheet layers 32 of the second portion 3b. When the electrode assembly 3 swells and deforms, this is conducive to further increasing the distance between the position where the second portion 3b applies the main force to the second wall 12 and the first wall 11, thereby facilitating further lowering the risk of damage or failure of the pressure relief mechanism 2. The distances from the multiple cathode electrode sheet layers 31 of the second portion 3b to the first wall 11 are set to increase along the first direction from an interior of the battery cell 100 toward an exterior of the battery cell 100, and when the electrode assembly 3 swells and deforms, this is conducive to reducing the force applied by the portion of the second portion 3b adjacent to the first wall 11 to the second wall 12, while further taking into account the energy density of the battery cell 100.

It can be understood that the distances from the multiple anode electrode sheet layers 32 of the second portion 3b to the first wall 11 increasing along the first direction from an interior of the battery cell 100 toward an exterior of the battery cell 100 may mean that at least two of the multiple anode electrode sheet layers 32 of the second portion 3b have different distances to the first wall 11, and the distances from the at least two anode electrode sheet layers 32 of the second portion 3b to the first wall 11 increase along the first direction from an interior of the battery cell 100 toward an exterior of the battery cell 100.

For example, the distances from the multiple anode electrode sheet layers 32 of the second portion 3b to the first wall 11 increase stepwise and gradually along the first direction from an interior of the battery cell 100 toward an exterior of the battery cell 100, then between any two adjacent anode electrode sheet layers 32 of the multiple anode electrode sheet layers 32 of the second portion 3b, the distance from the anode electrode sheet layer 32 close to the second wall 12 to the first wall 11 is greater than the distance from the anode electrode sheet layer 32 farther from the second wall 12 to the first wall 11.

For example, the distances from the multiple cathode electrode sheet layers 31 of the second portion 3b to the first wall 11 are equal, and the distances from the multiple anode electrode sheet layers 32 of the second portion 3b to the first wall 11 are equal, at this time, the distance from the cathode electrode sheet layer 31 of the second portion 3b to the first wall 11 is equal to or unequal to the distance from the anode electrode sheet layer 32 of the second portion 3b to the second wall 11; or, the distance from the multiple cathode electrode sheet layers 31 of the second portion 3b to the first wall 11 is equal, and the distances from the multiple anode electrode sheet layers 32 of the second portion 3b to the first wall 11 increase along the first direction from an interior of the battery cell 100 toward an exterior of the battery cell 100; or, the distances from the multiple cathode electrode sheet layers 31 of the second portion 3b to the first wall 11 increase along the first direction from an interior of the battery cell 100 toward an exterior of the battery cell 100, and the distances from the multiple anode electrode sheet layers 32 of the second portion 3b to the first wall 11 are equal; or, the distances from the multiple cathode electrode sheet layers 31 of the second portion 3b to the first wall 11 increase along the first direction from an interior of the battery cell 100 toward an exterior of the battery cell 100, and the distances from the multiple anode electrode sheet layers 32 of the second portion 3b to the first wall 11 increase along the first direction from an interior of the battery cell 100 toward an exterior of the battery cell 100.

Referring to FIG. 8 and FIG. 9, in some embodiments, the first portion 3a and the second portion 3b each include a separator 33. When the distance from the anode electrode sheet layer 32 of the second portion 3b to the first wall 11 is greater than the distance of the anode electrode sheet layer 32 of the first portion 3a to the first wall 11, a distance from the separator 33 of the second portion 3b to the first wall 11 is greater than a distance from the separator 33 of the first portion 3a to the first wall 11; and referring to FIG. 6 and FIG. 7, when a distance from the anode electrode sheet layer 32 of the second portion 3b to the first wall 11 is equal to a distance from the anode electrode sheet layer 32 of the first portion 3a to the first wall 11, a distance from the separator 33 of the second portion 3b to the first wall 11 is equal to a distance from the separator 33 of the first portion 3a to the first wall 11.

In the above technical solution, the distance from the separator 33 of the second portion 3b to the first wall 11 is set to be greater than or equal to the distance from the separator 33 of the first portion 3a to the first wall 11, which is convenient to achieve a good match with the arrangement of the anode electrode sheet layer 32 of the second portion 3b relative to the anode electrode sheet layer 32 of the first portion 3a, that is, the height of the separator 33 of the second portion 3b in a direction perpendicular to the first wall 11 achieves a good match with the heights of the anode electrode sheet layer 32 and the cathode electrode sheet layer 31 of the second portion 3b in the direction perpendicular to the first wall 11, and the height of the separator 33 of the first portion 3a in the direction perpendicular to the first wall 11 achieves a good match with the heights of the anode electrode sheet layer 32 and the cathode electrode sheet layer 31 of the first portion 3a in the direction perpendicular to the first wall 11, so as to facilitate the maximum utilization of the separator 33 material while ensuring that the separator 33 effectively isolates the anode electrode sheet layer 32 from the cathode electrode sheet layer 31.

In some embodiments, n second portions 3b are provided, n being a positive integer. When the distance from the anode electrode sheet layer 32 of the second portion 3b to the first wall 11 is greater than the distance from the anode electrode sheet layer 32 of the first portion 3a to the first wall 11:
a sum of thicknesses of the anode electrode sheet layer 32 and the cathode electrode sheet layer 31 of the second portion 3b accounts for 25%/n to 30%/n of a thickness of the electrode assembly 3 in the first direction; and/or, a sum of numbers of layers of the anode electrode sheet layer 32 and the cathode electrode sheet layer 31 of the second portion 3b accounts for 10%/n to 20%/n of a sum of numbers of layers of the anode electrode sheet layer 32 and the cathode electrode sheet layer 31 of the electrode assembly 3.

For example, one second portion 3b is provided. When the distance from the anode electrode sheet layer 32 of the second portion 3b to the first wall 11 is greater than the distance from the anode electrode sheet layer 32 of the first portion 3a to the first wall 11: a sum of thicknesses of all anode electrode sheet layers 32 and all cathode electrode sheet layers 31 of the second portion 3b accounts for 25% to 30% of a thickness of the electrode assembly 3 in the first direction; and/or, a sum of numbers of layers of all anode electrode sheet layers 32 and all cathode electrode sheet layers 31 of the second portion 3b accounts for 10% to 20% of a sum of numbers of layers of the anode electrode sheet layer 32 and the cathode electrode sheet layer 31 of the electrode assembly 3. For example, the ratio of the sum of thicknesses of all anode electrode sheet layers 32 and all cathode electrode sheet layers 31 of the second portion 3b to the thickness of the electrode assembly 3 in the first direction is 25%, 26%, 27%, 28%, 29%, 30%, or the like. The proportion of the sum of numbers of layers of all anode electrode sheet layers 32 and all cathode electrode sheet layers 31 of the second portion 3b to the sum of numbers of layers of the anode electrode sheet layer 32 and the cathode electrode sheet layer 31 of the electrode assembly 3 is 10%, 13%, 15%, 18%, 20%, or the like.

Alternatively, two second portions 3b are provided. When the distance from the anode electrode sheet layer 32 of the second portion 3b to the first wall 11 is greater than the distance from the anode electrode sheet layer 32 of the first portion 3a to the first wall 11: a sum of thicknesses of all anode electrode sheet layers 32 and all cathode electrode sheet layers 31 of the second portion 3b accounts for 12.5% to 15% of a thickness of the electrode assembly 3 in the first direction; and/or, a sum of numbers of layers of all anode electrode sheet layers 32 and all cathode electrode sheet layers 31 of the second portion 3b accounts for 5% to 10% of a sum of numbers of layers of all anode electrode sheet layers 32 and all cathode electrode sheet layers 31 of the electrode assembly 3. For example, the ratio of the sum of thicknesses of all anode electrode sheet layers 32 and all cathode electrode sheet layers 31 of the second portion 3b to the thickness of the electrode assembly 3 in the first direction is 12.5%, 13%, 13.5%, 14%, 14.5%, 15%, or the like. The proportion of the sum of numbers of layers of all anode electrode sheet layers 32 and all cathode electrode sheet layers 31 of the second portion 3b to the sum of numbers of layers of all anode electrode sheet layers 32 and all cathode electrode sheet layers 31 of the electrode assembly 3 is 5%, 6%, 7.5%, 9%, 10%, or the like.

In the above technical solution, when the distance from the anode electrode sheet layer 32 of the second portion 3b to the first wall 11 is greater than the distance from the anode electrode sheet layer 32 of the first portion 3a to the first wall 11, by providing the proportion of the sum of thicknesses of the anode electrode sheet layer 32 and the cathode electrode sheet layer 31 of the second portion 3b to the thickness of the electrode assembly 3 in the first direction, and/or the proportion of the sum of numbers of layers of the anode electrode sheet layer 32 and the cathode electrode sheet layer 31 of the second portion 3b to the sum of numbers of layers of the anode electrode sheet layer 32 and the cathode electrode sheet layer 31 of the electrode assembly 3. This facilitates reasonable setting of the thickness and/or number of layers of the second portion 3b, which is conducive to achieving both the reliability of the battery cell 100 and the energy density of the battery cell 100. It can be understood that, in this solution, the distances from the multiple anode electrode sheet layers 32 of the second portion 3b to the first wall 11 are equal; or, the distances from the multiple anode electrode sheet layers 32 of the second portion 3b to the first wall 11 increase along the first direction from an interior of the battery cell 100 toward an exterior of the battery cell 100.

In some embodiments, n second portions 3b are provided, n being a positive integer. When the distance from the anode electrode sheet layer 32 of the second portion 3b to the first wall 11 is equal to the distance from the anode electrode sheet layer 32 of the first portion 3a to the first wall 11: a sum of thicknesses of the cathode electrode sheet layers 31 of the second portion 3b accounts for 25%/n to 30%/n of a thickness of the electrode assembly 3 in the first direction; and/or, a number of layers of the cathode electrode sheet layers 31 of the second portion 3b accounts for 10%/n to 20%/n of a number of layers of the cathode electrode sheet layers 31 of the electrode assembly 3.

For example, one second portion 3b is provided. When the distance from the anode electrode sheet layer 32 of the second portion 3b to the first wall 11 is equal to the distance from the anode electrode sheet layer 32 of the first portion 3a to the first wall 11: a sum of thicknesses of all cathode electrode sheet layers 31 of the second portion 3b accounts for 25% to 30% of a thickness of the electrode assembly 3 in the first direction; and/or, a number of layers of all cathode electrode sheet layers 31 of the second portion 3b accounts for 10% to 20% of a number of layers of all cathode electrode sheet layers 31 of the electrode assembly 3. For example, the ratio of the sum of thicknesses of all cathode electrode sheet layers 31 of the second portion 3b to the thickness of the electrode assembly 3 in the first direction is 25%, 26%, 27%, 28%, 29%, 30%, or the like. The proportion of the number of layers of all cathode electrode sheet layers 31 of the second portion 3b to the number of layers of all cathode electrode sheet layers 31 of the electrode assembly 3 is 10%, 13%, 15%, 17%, 20%, or the like.

Alternatively, two second portions 3b are provided. When the distance from the anode electrode sheet layer 32 of the second portion 3b to the first wall 11 is equal to the distance from the anode electrode sheet layer 32 of the first portion 3a to the first wall 11: a sum of thicknesses of all cathode electrode sheet layers 31 of the second portion 3b accounts for 12.5% to 15% of a thickness of the electrode assembly 3 in the first direction; and/or, a number of layers of all cathode electrode sheet layers 31 of the second portion 3b accounts for 5% to 10% of a number of layers of all cathode electrode sheet layers 31 of the electrode assembly 3. For example, the ratio of the sum of thicknesses of all cathode electrode sheet layers 31 of the second portion 3b to the thickness of the electrode assembly 3 in the first direction is 12.5%, 13%, 13.5%, 14%, 14.5%, 15%, or the like. The proportion of the number of layers of all cathode electrode sheet layers 31 of the second portion 3b to the number of layers of all cathode electrode sheet layers 31 of the electrode assembly 3 is 5%, 6%, 7.5%, 8%, 10%, or the like.

In the above technical solution, when the distance from the anode electrode sheet layer 32 of the second portion 3b to the first wall 11 is equal to the distance from the anode electrode sheet layer 32 of the first portion 3a to the first wall 11, by providing the proportion of the sum of thicknesses of the cathode electrode sheet layers 31 of the second portion 3b to the thickness of the electrode assembly 3 in the first direction, and/or the proportion of the number of layers of the cathode electrode sheet layers 31 of the second portion 3b to the number of layers of the cathode electrode sheet layers 31 of the electrode assembly 3. This facilitates reasonable setting of the thickness and/or number of layers of the cathode electrode sheet layers 31 of the second portion 3b, which is conducive to achieving both the reliability of the battery cell 100 and the energy density of the battery cell 100.

Referring to FIG. 6 to FIG. 9, in some embodiments, on a plane where the first wall 11 is located, an orthogonal projection of the second portion 3b is located outside an outer contour of an orthogonal projection of the pressure relief mechanism 2, then on the plane where the first wall 11 is located, the orthogonal projection of the second portion 3b and the orthogonal projection of the pressure relief mechanism 2 are arranged at an interval along the first direction. For example, in the first direction, a distance between an end of the second portion 3b away from the second wall 12 and the second wall 12 is less than a minimum spacing between the pressure relief mechanism 2 and the second wall 12.

In the above technical solution, on the plane where the first wall 11 is located, the orthogonal projection of the second portion 3b is set to be located outside the outer contour of the orthogonal projection of the pressure relief mechanism 2, which is convenient to arrange the orthogonal projection of the second portion 3b and the orthogonal projection of the pressure relief mechanism 2 at an interval along the first direction, so as to further appropriately increase the thickness of the second portion 3b in the first direction while reducing the tensile stress exerted on the pressure relief mechanism 2 due to swelling and deformation of the electrode assembly 3, thereby further taking into account the volumetric energy density of the battery cell 100.

Referring to FIG. 6 to FIG. 10, in some embodiments, a maximum distance from the multiple cathode electrode sheet layers 31 of the second portion 3b to the first wall 11 is h, with h≥2 mm. It can be understood that, when the distances from the multiple cathode electrode sheet layers 31 of the second portion 3b from to first wall 11 are equal, the distance between any cathode electrode sheet layer 31 of the second portion 3b and the first wall 11 is h; or, when the distances from the multiple cathode electrode sheet layers 31 of the second portion 3b to the first wall 11 increase along the first direction from an interior of the battery cell 100 toward an exterior of the battery cell 100, the distance between the cathode electrode sheet layer 31 of the second portion 3b closest to the second wall 12 and the first wall 11 is h.

In the above technical solution, the maximum distance h from the multiple cathode electrode sheet layers 31 of the second portion 3b to the first wall 11 is set to be greater than or equal to 2 mm, which is convenient to effectively reduce the tension on the pressure relief mechanism 2 when the electrode assembly 3 swells and deforms, while facilitating the cooperation between the second portion 3b and the first wall 11.

For example, h is 2 mm, 3 mm, 5 mm, 8 mm, 9 mm, 13 mm, 15 mm, 16 mm, or the like.

Further, h≤15 mm. Thus, while reducing the tension on the pressure relief mechanism 2 when the electrode assembly 3 swells and deforms, the volumetric energy density of the battery cell 100 can be taken into account to a certain extent.

For example, h is 2.5 mm, 3.5 mm, 6 mm, 10 mm, 14 mm, 14.5 mm, or the like.

Further, 3 mm≤h≤10 mm, this is convenient to achieve both the reliability and energy density of the battery cell 100.

For example, h is 4 mm, 5.5 mm, 6.5 mm, 7 mm, 8.5 mm, 9.5 mm, or the like.

In some embodiments, the electrode assembly 3 is a laminated electrode assembly, a lamination direction of the anode electrode sheet layer 32 and the cathode electrode sheet layer 31 in the electrode assembly 3 being the first direction; or, the electrode assembly 3 is a wound electrode assembly, an axial direction of the electrode assembly 3 being perpendicular to the first direction.

In the above technical solution, the electrode assembly 3 is set to be a laminated structure or a wound structure, it is convenient to allow the battery cell 100 to set electrode assemblies 3 of different structures according to actual needs, which is conducive to improving the applicability of the battery cell 100.

As an example, multiple anode electrode sheet layers 32 and multiple cathode electrode sheet layers 31 are provided, and the multiple anode electrode sheet layers 32 and the multiple cathode electrode sheet layers 31 are alternately stacked. As an example, multiple cathode electrode sheet layers 31 are provided, and the anode electrode sheet is folded to form multiple stacked anode electrode sheet layers 32, with one cathode electrode sheet layer 31 sandwiched between adjacent anode electrode sheet layers 32. As an example, the anode electrode sheet is folded to form multiple stacked anode electrode sheet layers 32, and the cathode electrode sheet is folded to form multiple stacked cathode electrode sheet layers 31. As an example, multiple separators 33 may be provided, and each separator 33 is disposed between any adjacent anode electrode sheet layer 32 and cathode electrode sheet layer 31. As an example, the separator 33 may be provided continuously and is disposed between any adjacent anode electrode sheet layer 32 and cathode electrode sheet layer 31 by folding or winding. For example, for a laminated electrode assembly, the separator 33 may extend substantially in a serpentine shape.

It can be understood that, for a laminated electrode assembly, the difference between the cathode electrode sheet layer 31 of the second portion 3b and the cathode electrode sheet layer 31 of the first portion 3a in embodiments of the present application can be achieved by cutting during single-layer sheet cutting. Similarly, for a laminated electrode assembly, the difference between the anode electrode sheet layer 32 of the second portion 3b and the anode electrode sheet layer 32 of the first portion 3a in embodiments of the present application can also be achieved by cutting during single-layer sheet cutting.

In some embodiments, as shown in FIG. 10, the electrode assembly 3 is a wound electrode assembly, and the second portions 3b are provided on two opposite sides of the first portion 3a in the first direction, respectively. At this time, the two second portions 3b may correspond to outer circumferential winding layers of the wound electrode assembly, and the first portion 3a may correspond to inner circumferential winding layers of the wound electrode assembly.

In the above technical solution, the electrode assembly 3 is set to be a wound electrode assembly, and the second portions 3b are provided on two opposite sides of the first portion 3a in the first direction, respectively, which is conducive to simplifying the unfolded structure of the wound electrode assembly and facilitating the processing of the electrode assembly 3.

For example, the cathode electrode sheet of the electrode assembly 3 is used as an example, the unfolded cathode electrode sheet may include a first segment 35 and a second segment 36 sequentially provided along a length direction, where the first segment 35 corresponds to inner circumferential winding layers and is capable of forming the first portion 3a, and the second segment 36 corresponds to outer circumferential winding layers and is capable of forming the two second portions 3b. If the distances from the multiple cathode electrode sheet layers 31 of the second portion 3b to the first wall 11 are equal, it is convenient to make the edge of the second segment 36 adjacent to the first wall 11 corresponding to the second portion 3b a straight line. Further, if the distances from the cathode electrode sheet layers 31 of the two second portions 3b to the first wall 11 are equal, it is convenient to make the entire edge of the second segment 36 adjacent to the first wall 11 a straight line, which is conducive to simplifying the processing of the cathode electrode sheet.

Referring to FIG. 6 to FIG. 9, in some embodiments, distances from the cathode electrode sheet layer 31 of the two second portions 3b to the first wall 11 are equal, and distances from the anode electrode sheet layers 32 of the two second portions 3b to the first wall 11 are equal.

Optionally, in the above solution, the distances from the cathode electrode sheet layer 31 of the two second portions 3b to the first wall 11 can be understood as a minimum distance, a maximum distance, or an average distance. For example, the two second portions 3b may be symmetrically provided with respect to the first portion 3a.

In the above technical solution, the distanced from the cathode electrode sheet layer 31 of the two second portions 3b to the first wall 11 are set to be equal, and the distances from the anode electrode sheet layer 32 of the two second portions 3b to the first wall 11 are set to be equal, which is convenient to further simplify the structure of the cathode electrode sheets and anode electrode sheets of the wound electrode assembly and simplify the processing steps.

Certainly, in other embodiments, the distances from the cathode electrode sheet layer 31 of the two second portions 3b to the first wall 11 are unequal; and/or, the distances from the anode electrode sheet layer 32 of the two second portions 3b to the first wall 11 are unequal.

In some embodiments, a sum of lengths of the multiple cathode electrode sheet layers 31 of the two second portions 3b in a circumferential direction of the electrode assembly 3 accounts for 30% to 50% of a circumferential length of the electrode assembly 3. The circumferential direction of the electrode assembly 3 can be understood as a winding direction of the electrode assembly 3, where the winding direction is perpendicular to an axial direction of the electrode assembly 3. Then, for the unfolded cathode electrode sheet of the electrode assembly 3, the proportion of the length of the second segment 36 to the sum of lengths of the first segment 35 and the second segment 36 is 30% to 50%, for example, optionally 30%, 35%, 40%, 45% 50%, or the like.

In the above technical solution, the sum of lengths of the multiple cathode electrode sheet layers 31 of the two second portions 3b in the circumferential direction of the electrode assembly 3 is set to be accounted for 30% to 50% of the circumferential length of the electrode assembly 3. This facilitates reasonable setting of the thickness and/or number of layers of the second portion 3b, which is conducive to achieving both the reliability of the battery cell 100 and the energy density of the battery cell 100.

Referring to FIG. 6 to FIG. 9, in some embodiments, the case 1 has two second walls 12 oppositely arranged along the first direction, the first wall 11 connects the two second walls 12, and the second portions 3b are disposed between the first portion 3a and each of the second walls 12, respectively. It can be seen that two second portions 3b are provided, and the first portion 3a is disposed between the two second portions 3b.

In the above technical solution, the first wall 11 is connected between the two second walls 12, the second portions 3b are disposed between the first portion 3a and each of the second walls 12, respectively, and when the electrode assembly 3 swells and deforms, this is conducive to reducing the effect of each second wall 12 on the first wall 11, facilitating reducing the overall tension on two ends of the pressure relief mechanism 2 in the first direction, thereby facilitating further lowering the risk of the pressure relief mechanism 2 being damaged by tension.

In some embodiments, the second wall 12 is a wall with a largest area in the case 1, then the second wall 12 can be understood as the "large surface" of the case 1.

It can be seen that the first wall 11 is a narrow-surface case wall connected between the two second walls 12. After the electrode assembly 3 is installed in the case 1, the second wall 12 is opposite to the flat region 30 of the electrode assembly 3. When the internal pressure of the case 1 reaches a certain value, the pressure relief mechanism 2 achieves pressure relief.

When the electrode assembly 3 swells, the electrode assembly 3 pushes against the second wall 12, forcing the case 1 outward along the first direction, causing the case 1 to deform. The second wall 12 is the main force-bearing surface with large deformation, and force on the first wall 11 is smaller than that on the second wall 12. Therefore, the pressure relief mechanism 2 is provided on the first wall 11, and the pressure relief mechanism 2 is provided on a surface of the case 1 that is subjected to less force. Compared with providing the pressure relief mechanism 2 on the second wall 12, the force on the pressure relief mechanism 2 can be reduced, thereby further lowering the risk of damage or failure of the pressure relief mechanism 2 due to tension.

In the above technical solution, the pressure relief mechanism 2 is provided on the first wall 11, where the first wall 11 is not the wall with the largest area in the case 1, the pressure relief mechanism 2 can be provided on a surface of the case 1 that is subjected to less force. Compared with providing the pressure relief mechanism 2 on the second wall 12, when the electrode assembly 3 swells and deforms, the force on the pressure relief mechanism 2 can be reduced, which is conducive to further lowering the risk of damage or failure of the pressure relief mechanism 2 due to tension.

Referring to FIG. 3 and FIG. 4, in some embodiments, the pressure relief mechanism 2 and a terminal 4 of the battery cell 100 are respectively provided on walls of different sides of the case 1, that is, the terminal 4 is provided on a wall of the case 1 other than the first wall 11.

In the above technical solution, the terminal 4 is connected with a tab of the electrode assembly 3, and a certain gap is disposed between the wall where the terminal 4 is located and a main body of the electrode assembly 3. The pressure relief mechanism 2 and the terminal 4 are respectively provided on walls of different sides of the case 1, a distance between the pressure relief mechanism 2 and the main body of the electrode assembly 3 can be appropriately shortened to a certain extent, making the distance between the pressure relief mechanism 2 and the main body of the electrode assembly 3 less restricted by the terminal 4. When the battery cell 100 experiences thermal runaway, most of the discharge medium in the case 1 can directly flow from an edge position of the main body of the electrode assembly 3 to the pressure relief mechanism 2, thereby shortening the path of the discharge medium flowing to the pressure relief mechanism 2, enabling the discharge medium to quickly flow to the pressure relief mechanism 2, shortening the time for the discharge medium to reach the pressure relief mechanism 2, and improving the timeliness of pressure relief of the battery cell 100. The tab includes multiple tab sheets 34.

In some embodiments, the case 1 further has a third wall 13, and the terminal 4 is provided on the third wall 13. The third wall 13 is adjacent and connected to the first wall 11 and the second wall 12, respectively; or, the third wall 13 is adjacent and connected to the second wall 12, and the third wall 13 is opposite to the first wall 11.

It can be seen that the wall where the pressure relief mechanism 2 is provided and the wall where the terminal 4 is provided are adjacent or opposite to each other.

In the above technical solution, the terminal 4 is provided on the third wall 13, and the third wall 13 is adjacent or opposite to the first wall 11, it is convenient to meet the differentiated setting needs of the battery cell 100, which is conducive to improving the applicability of the battery cell 100.

For example, the case 1 includes a case body 1a and a case cover 1b, two ends of the case body 1a in the second direction are open, respectively, the case cover 1b is provided at an open end of the case body 1a, the first wall 11 and the second wall 12 are both formed on the case body 1a, and at least one of the two case covers 1b is formed as the third wall 13. At this time, the third wall 13 is adjacent and connected to the first wall 11 and the second wall 12, respectively; and the case body 1a is open at one of two ends in the second direction, the case cover 1b is provided at an open end of the case body 1a, the case cover 1b is formed as the third wall 13, and the case cover 1b is opposite to the first wall 11 along the second direction.

Referring to FIG. 3 and FIG. 4, in some embodiments, the case 1 includes a case body 1a and a case cover 1b, at least one end of two ends of the case body 1a in the second direction is open, the case cover 1b is provided at an open end of the case body 1a, and the first wall 11 and the second wall 12 are both formed on the case body 1a, the second direction being perpendicular to the first direction.

For example, the case body 1a may be a hollow structure with an opening at one end, and the case body 1a may also be a hollow structure with openings at two opposite ends. The case body 1a may be of multiple shapes, for example, prismatic. The case cover 1b is a component that closes the opening of the case body 1a to isolate the internal environment of the battery cell 100 from the external environment. The case cover 1b and the case body 1a jointly define a mounting cavity for accommodating the electrode assembly 3, an electrolyte, and other components. The shape of the case cover 1b may be adapted to the shape of the case body 1a, for example, the case body 1a is a rectangular structure, and the case cover 1b is a rectangular plate-like structure adapted to the case body 1a; or, the case body 1a is a cylindrical structure, and the case cover 1b is a circular plate-like structure adapted to the case body 1a. The case cover 1b may be made of various materials, such as copper, iron, aluminum, steel, aluminum alloy, plastic, or the like. The material of the case cover 1b may be the same as or different from the material of the case body 1a.

In the embodiment where the case body 1a is formed an opening at one end, one case cover 1b may be provided correspondingly. In the embodiment where the case body 1a is formed openings at two opposite ends, two case covers 1b may be provided correspondingly, the two case covers 1b close the two openings of the case body 1a, respectively, and the two case covers 1b and the case body 1a jointly define the mounting cavity.

The case body 1a has the first wall 11, the pressure relief mechanism 2 may be integrally formed with the first wall 11 or separately provided from the first wall 11. The pressure relief mechanism 2 is provided on the case body 1a, the structure of the case cover 1b can be simplified, which is convenient to shorten the distance between the pressure relief mechanism 2 and the main body of the electrode assembly 3, thereby shortening the path of the discharge medium flowing to the pressure relief mechanism 2 during pressure relief, shortening the time for the discharge medium to reach the pressure relief mechanism 2, and improving the timeliness of pressure relief of the battery cell 100, thus facilitating further improving the reliability of the battery cell 100.

In the above technical solution, the first wall 11 and the second wall 12 are formed on the case body 1a, the structure of the case cover 1b can be simplified, which is convenient to shorten the distance between the pressure relief mechanism 2 and the main body of the electrode assembly 3, thereby shortening the path of the discharge medium flowing to the pressure relief mechanism 2 during pressure relief, shortening the time for the discharge medium to reach the pressure relief mechanism 2, and improving the timeliness of pressure relief of the battery cell 100.

For example, one end of the case body 1a in the second direction is open, and the first wall 11 is provided at an end of the case body 1a away from the open end; or, two ends of the case body 1a in the second direction are open, respectively, the first wall 11 extend to open ends on two sides, and opposite ends of the first wall 11 are connected with two end covers, respectively. Thus, this is convenient to improve the processing convenience of the case body 1a and the case cover 1b, and improve the assembly convenience of the case 1.

Referring to FIG. 6 to FIG. 9, in some embodiments, the pressure relief mechanism 2 is integrally formed with the first wall 11; or, as shown in FIG. 3, the pressure relief mechanism 2 is separately provided from the first wall 11, and the pressure relief mechanism 2 is mounted on the first wall 11. For example, the first wall 11 is provided with a through hole, and the pressure relief mechanism 2 is mounted on the through hole.

When the pressure relief mechanism 2 is integrally formed with the first wall 11, a score groove 11b may be provided on the first wall 11, a region of the first wall 11 corresponding to the score groove 11b forms a weak region of the pressure relief mechanism 2, and the weak region is configured to rupture when the battery cell 100 relieves pressure. The forming method of the pressure relief mechanism 2 is simple, and the production cost is low. It can be understood that the inner surface of the first wall 11 and/or outer surface of the first wall 11 is formed with the score groove 11b.

It can be seen that in the above technical solution, the pressure relief mechanism 2 is integrally formed with the first wall 11, the forming method of the pressure relief mechanism 2 is simple, the number of components constituting the battery cell 100 can be reduced, the structure of the battery cell 100 can be simplified, and the cost can be reduced.

In embodiments of the present application, the shape of the score groove 11b is not specifically limited. For example, the score groove 11b includes one first straight groove segment and four second straight groove segments, and two ends of the first straight groove segment are connected to two second straight groove segments provided at a preset angle, respectively, so that two ends of the score groove 41 each substantially form a Y-shape.

When the pressure relief mechanism 2 is separately provided from the first wall 11, and the pressure relief mechanism 2 and the case 1 are two separate components, which are installed together after being formed separately. The pressure relief mechanism 2 may be components such as an explosion-proof sheet, an explosion-proof valve, a safety valve, or the like. The pressure relief mechanism 2 may be mounted on the first wall 11 by adhesion, welding, or the like. The first wall 11 is provided with a through hole, and the pressure relief mechanism 2 is mounted on the through hole. When the internal pressure or temperature of the battery cell 100 reaches a threshold, the pressure relief mechanism 2 opens at least part of the through hole, and the discharge medium inside the battery cell 100 is discharged through the through hole to relieve the internal pressure of the battery cell 100.

It can be seen that in the above technical solution, the pressure relief mechanism 2 and the first wall 11 are configured as separate components, which is convenient to provide the pressure relief mechanism 2 on the case 1, with low generation difficulty and high efficiency. This can improve the production efficiency of the battery cell 100.

The pressure relief mechanism 2 being an explosion-proof sheet is used as an example, the explosion-proof sheet is a sheet body with strength in at least part of the region less than the strength of the first wall 11, the explosion-proof sheet covers the through hole, and the explosion-proof sheet is welded to the first wall 11. When the internal pressure or temperature of the battery cell 100 reaches a threshold, at least part of the explosion-proof sheet is destroyed, thereby opening at least part of the through hole to relieve the internal pressure of the battery cell 100.

In some embodiments, when the pressure relief mechanism 2 is integrally formed with the first wall 11, an inner surface and/or an outer surface of the first wall 11 is provided with a groove 11a, and a bottom wall of the groove 11a forms the pressure relief mechanism 2.

In the above technical solution, a groove 11a is provided on the inner surface and/or outer surface of the first wall 11, and the bottom wall of the groove 11a forms the pressure relief mechanism 2, facilitating processing and forming the pressure relief mechanism 2.

The first wall 11 being the bottom wall of the case 1 is used as an example, if the inner surface of the first wall 11 is provided with the groove 11a, a part of an upper surface of the first wall 11 is recessed downward to form the groove 11a, and a lower side wall of the groove 11a is the bottom wall; and if an outer surface of the first wall 11 is provided with the groove 11a, a part of the lower surface of the first wall 11 is recessed upward to form the groove 11a, and an upper side wall of the groove 11a is the bottom wall.

In some embodiments, when the pressure relief mechanism 2 is integrally formed with the first wall 11, the first wall 11 is formed with a score groove, a region of the first wall 11 corresponding to the score groove is configured as a weak region of the pressure relief mechanism 2, and the weak region is configured to rupture when the battery cell 100 relieves pressure.

In the above technical solution, the first wall 11 is formed with a score groove, and the region of the first wall 11 corresponding to the score groove is configured as a weak region of the pressure relief mechanism 2, which is convenient for processing and forming the pressure relief mechanism 2.

According to a second aspect, embodiments of the present application provide a battery cell 100. The battery cell 100 includes: a case 1, a pressure relief mechanism 2, and an electrode assembly 3. The case 1 has a first wall 11 that is adjacent and connected. The pressure relief mechanism 2 is provided on the first wall 11. The electrode assembly 3 is provided in the case 1, the electrode assembly 3 includes anode electrode sheet layers 32 and cathode electrode sheet layers 31 stacked along a first direction, and a distance between the electrode assembly 3 and the first wall 11 satisfies 2 mm≤h≤15 mm, the first direction being parallel to a plane where the first wall 11 is located.

In the above technical solution, the distance between the electrode assembly 3 and the first wall 11 is set to satisfy 2 mm≤h≤15 mm, and when the electrode assembly swells and deforms, this is conducive to increasing the distance between the position where the electrode assembly applies the main force to the two walls oppositely arranged along the first direction of the case 1 and the first wall, thereby facilitating lowering the risk of the pressure relief mechanism 2 being damaged or failing due to tension on the first wall 11, improving the use reliability of the battery cell, while also taking into account the volumetric energy density of the battery cell to a certain extent without excessively reducing the energy density of the battery cell.

According to a third aspect, embodiments of the present application provide a battery 200, including the above battery cell 100.

In the above technical solution, since the battery 200 adopts the above battery cell 100, which is conducive to improving the use reliability and energy density of the battery 200.

According to a third aspect, embodiments of the present application provide an electric apparatus 1000, including the above battery 200, and the battery 200 configured to provide electrical energy.

In the above technical solution, since the electric apparatus 1000 adopts the above battery 200, and the battery 200 has good use reliability and energy density, which is conducive to improving the reliability and endurance capability of the electric apparatus 1000.

Referring again to FIG. 3 to FIG. 9, the battery cell 100 of specific examples of the present application is described.

In embodiments of the present application, the battery cell 100 includes a case 1, a pressure relief mechanism 2, and an electrode assembly 3. The case 1 has a first wall 11 and two second walls 12, and each second wall 12 is adjacent and connected to the first wall 11. The pressure relief mechanism 2 is provided on the first wall 11. The electrode assembly 3 is provided in the case 1, the electrode assembly 3 has a first portion 3a and a second portion 3b sequentially arranged along a first direction, the first portion 3a and the second portion 3b each include multiple anode electrode sheet layers 32 and multiple cathode electrode sheet layers 31, the multiple anode electrode sheet layers 32 and the multiple cathode electrode sheet layers 31 are alternately stacked one-to-one along the first direction, the second portions 3b are disposed between the first portion 3a and each second wall 12, respectively, a distance x2 from the cathode electrode sheet layer 31 of the second portion 3b to the first wall 11 is greater than a distance x1 from the cathode electrode sheet layer 31 of the first portion 3a to the first wall 11, and the first direction is perpendicular to the second wall 12.

As shown in FIG. 6, the distances from the multiple cathode electrode sheet layers 31 of the second portion 3b to the first wall 11 are equal, and a distance x4 from the anode electrode sheet layer 32 of the second portion 3b to the first wall 11 is equal to a distance x3 from the anode electrode sheet layer 32 of the first portion 3a to the first wall 11. As shown in FIG. 7, the distances from the multiple cathode electrode sheet layers 31 of the second portion 3b to the first wall 11 increase along the first direction from an interior of the battery cell 100 toward an exterior of the battery cell 100, and the distance x4 from the anode electrode sheet layer 32 of the second portion 3b to the first wall 11 is equal to the distance x3 from the anode electrode sheet layer 32 of the first portion 3a to the first wall 11. As shown in FIG. 8, the distances from the multiple cathode electrode sheet layers 31 of the second portion 3b to the first wall 11 are equal, the distance x4 from the anode electrode sheet layer 32 of the second portion 3b to the first wall 11 is greater than the distance x3 from the anode electrode sheet layer 32 of the first portion 3a to the first wall 11, and the distances from the multiple anode electrode sheet layers 32 of the second portion 3b to the first wall 11 are equal. As shown in FIG. 9, the distances from the multiple cathode electrode sheet layers 31 of the second portion 3b to the first wall 11 increase along the first direction from an interior of the battery cell 100 toward an exterior of the battery cell 100, the distance x4 from the anode electrode sheet layer 32 of the second portion 3b to the first wall 11 is greater than the distance x3 from the anode electrode sheet layer 32 of the first portion 3a to the first wall 11, and the distances from the multiple anode electrode sheet layers 32 of the second portion 3b to the first wall 11 increase along the first direction from an interior of the battery cell 100 toward an exterior of the battery cell 100.

In the above technical solution, when the electrode assembly 3 swells and deforms, the tensile stress exerted on the pressure relief mechanism 2 located on the first wall 11 can be reduced, reducing the probability of the pressure relief mechanism 2 being damaged or failing due to tension, while also taking into account the volumetric energy density of the battery cell 100.

It should be noted that, without conflict, the embodiments and features in the embodiments in the present application may be combined with each other.

The foregoing descriptions are merely preferred embodiments of the present application which are not intended to limit the present application. Persons skilled in the art understand that the present application may have various modifications and variations. Any modifications, equivalent replacements, and improvements made without departing from the spirit and principle of the present application shall fall within the protection scope of the present application.

## Claims

1. A battery cell, comprising:
a case, wherein the case has a first wall and a second wall that are adjacent and connected to each other;
a pressure relief mechanism, wherein the pressure relief mechanism is provided on the first wall; and
an electrode assembly, wherein the electrode assembly is provided in the case, the electrode assembly has a first portion and a second portion sequentially arranged along a first direction, the first portion and the second portion each comprise multiple anode electrode sheet layers and multiple cathode electrode sheet layers, the multiple anode electrode sheet layers and the multiple cathode electrode sheet layers are alternately stacked one-to-one along the first direction, the second portion is disposed between the first portion and the second wall, a distance x2 from the cathode electrode sheet layer of the second portion to the first wall is greater than a distance x1 from the cathode electrode sheet layer of the first portion to the first wall, and the first direction is perpendicular to the second wall.

2. The battery cell according to claim 1, wherein,
distances from the multiple cathode electrode sheet layers of the second portion to the first wall are equal; or
distances from the multiple cathode electrode sheet layers of the second portion to the first wall increase along the first direction from an interior of the battery cell toward an exterior of the battery cell.

3. The battery cell according to claim 1 or 2, wherein a distance x4 from the anode electrode sheet layer of the second portion to the first wall is greater than or equal to a distance x3 from the anode electrode sheet layer of the first portion to the first wall.

4. The battery cell according to claim 3, wherein,
distances from the multiple anode electrode sheet layers of the second portion to the first wall are equal; or
distances from the multiple anode electrode sheet layers of the second portion to the first wall increase along the first direction from an interior of the battery cell toward an exterior of the battery cell.

5. The battery cell according to claim 3 or 4, wherein the first portion and the second portion each comprise a separator,
when the distance from the anode electrode sheet layer of the second portion to the first wall is greater than the distance from the anode electrode sheet layer of the first portion to the first wall, a distance from the separator of the second portion to the first wall is greater than a distance from the separator of the first portion to the first wall; and
when the distance from the anode electrode sheet layer of the second portion to the first wall is equal to the distance from the anode electrode sheet layer of the first portion to the first wall, the distance from the separator of the second portion to the first wall is equal to the distance from the separator of the first portion to the first wall.

6. The battery cell according to any one of claims 3 to 5, wherein n second portions are provided, n being a positive integer, and when the distance from the anode electrode sheet layer of the second portion to the first wall is greater than the distance from the anode electrode sheet layer of the first portion to the first wall,
a sum of thicknesses of the anode electrode sheet layer and the cathode electrode sheet layer of the second portion accounts for 25%/n to 30%/n of a thickness of the electrode assembly in the first direction; and/or,
a sum of numbers of layers of the anode electrode sheet layer and the cathode electrode sheet layer of the second portion accounts for 10%/n to 20%/n of a sum of numbers of layers of the anode electrode sheet layer and the cathode electrode sheet layer of the electrode assembly.

7. The battery cell according to any one of claims 3 to 5, wherein n second portions are provided, n being a positive integer, and when the distance from the anode electrode sheet layer of the second portion to the first wall is equal to the distance from the anode electrode sheet layer of the first portion to the first wall,
a sum of thicknesses of the cathode electrode sheet layers of the second portion accounts for 25%/n to 30%/n of a thickness of the electrode assembly in the first direction; and/or,
a number of layers of the cathode electrode sheet layers of the second portion accounts for 10%/n to 20%/n of a number of layers of the cathode electrode sheet layers of the electrode assembly.

8. The battery cell according to any one of claims 1 to 7, wherein on a plane where the first wall is located, an orthogonal projection of the second portion is located outside an outer contour of an orthogonal projection of the pressure relief mechanism.

9. The battery cell according to any one of claims 1 to 8, wherein a maximum distance from the multiple cathode electrode sheet layers of the second portion to the first wall is h, with h≥2 mm.

10. The battery cell according to claim 9, wherein h≤15 mm.

11. The battery cell according to claim 9 or 10, wherein 3 mm≤h≤10 mm.

12. The battery cell according to any one of claims 1 to 11, wherein,
the electrode assembly is a laminated electrode assembly, a lamination direction of the anode electrode sheet layer and the cathode electrode sheet layer in the electrode assembly being the first direction; or
the electrode assembly is a wound electrode assembly, an axial direction of the electrode assembly being perpendicular to the first direction.

13. The battery cell according to claim 12, wherein the electrode assembly is a wound electrode assembly, and the second portions are provided on two opposite sides of the first portion in the first direction, respectively.

14. The battery cell according to claim 13, wherein distances from the cathode electrode sheet layer of the two second portions to the first wall are equal, and distances from the anode electrode sheet layer of the two second portions to the first wall are equal.

15. The battery cell according to claim 13 or 14, wherein a sum of lengths of the multiple cathode electrode sheet layers of the two second portions in a circumferential direction of the electrode assembly accounts for 30% to 50% of a circumferential length of the electrode assembly.

16. The battery cell according to any one of claims 1 to 15, wherein the case has two second walls oppositely arranged along the first direction, the first wall connects the two second walls, and the second portions are disposed between the first portion and each of the second walls, respectively.

17. The battery cell according to claim 16, wherein the second wall is a wall with a largest area in the case.

18. The battery cell according to any one of claims 1 to 17, wherein the pressure relief mechanism and a terminal of the battery cell are respectively provided on walls of different sides of the case.

19. The battery cell according to claim 18, wherein the case further has a third wall, and the terminal is provided on the third wall, wherein
the third wall is adjacent and connected to the first wall and the second wall, respectively; or
the third wall is adjacent and connected to the second wall, and the third wall is opposite to the first wall.

20. The battery cell according to any one of claims 1 to 19, wherein the case comprises a case body and a case cover, at least one end of two ends of the case body in a second direction is open, the case cover is provided at an open end of the case body, and the first wall and the second wall are both formed on the case body, the second direction being perpendicular to the first direction.

21. The battery cell according to claim 20, wherein,
one end of the case body in the second direction is open, and the first wall is connected to an end of the second wall away from the open end; or
two ends of the case body in the second direction are open, respectively, and the first wall and the second wall both extend to open ends on two sides.

22. The battery cell according to any one of claims 1 to 21, wherein the pressure relief mechanism is integrally formed with the first wall.

23. The battery cell according to claim 22, wherein an inner surface and/or an outer surface of the first wall is provided with a groove, and a bottom wall of the groove forms the pressure relief mechanism.

24. The battery cell according to claim 22 or 23, wherein the first wall is formed with a score groove, a region of the first wall corresponding to the score groove is configured as a weak region of the pressure relief mechanism, and the weak region is configured to rupture when the battery cell relieves pressure.

25. The battery cell according to any one of claims 1 to 21, wherein the pressure relief mechanism is separately provided from the first wall, and the pressure relief mechanism is mounted on the first wall.

26. A battery cell, comprising:
a case, wherein the case has a first wall and a second wall that are adjacent and connected to each other;
a pressure relief mechanism, wherein the pressure relief mechanism is provided on the first wall; and
an electrode assembly, wherein the electrode assembly is provided in the case, the electrode assembly comprises anode electrode sheet layers and cathode electrode sheet layers stacked along a first direction, and a distance between the electrode assembly and the first wall satisfies 2 mm≤h≤15 mm, the first direction being parallel to a plane where the first wall is located.

27. A battery, comprising the battery cell according to any one of claims 1 to 26.

28. An electric apparatus, comprising the battery according to claim 27, and the battery configured to provide electrical energy.
